# EUROPEAN PATENT SPECIFICATION

(11) **EP 2 533 321 B1**
(45) Date of publication and mention of the grant of the patent: **12.08.2015**
(21) Application number: 12170789.7
(22) Date of filing: 05.06.2012
(51) Int. Cl.: H01M 10/6554, H01M 2/02, H01M 2/10, H01M 2/20, H01M 10/04

(54) **Modular battery with exchangeable cell elements**
Modulare Batterie mit austauschbaren Zellelementen
Batterie modulaire avec éléments de cellules échangeables

(30) Priority: 07.06.2011 GB 201109503
(43) Date of publication of application: 12.12.2012
(73) Proprietor: Leclanché S.A., 1400 Yverdon-les-Bains (CH)
(72) Inventor: Nissels, Robert, 3232 Ins (CH); Chazarenc, Elie, 2036 Cormondrèche (CH); Volluz, Patrick, 2013 Colombier (CH)
(74) Representative: Harrison, Robert John

(56) References cited:
- WO-A1-2007/102670
- WO-A2-2010/031856
- JP-A- 2001 256 934
- JP-A- 2005 197 179
- JP-A- 2007 048 637
- US-A1- 2007 264 563
- US-A1- 2007 281 208
- US-A1- 2009 252 994
- US-A1- 2010 021 802
- US-A1- 2011 070 474

## Description

The present disclosure relates to components for a battery, to a method for manufacturing batteries and to a battery manufactured therewith. In particular the present invention relates to serviceable secondary batteries and to a method for assembling and for exchanging components of the secondary battery.

### Introduction and Related Art

Secondary batteries are becoming increasingly important for energy storage in mobile applications as well as buffer systems for electric grids and are an increasingly important part of modem energy technology. Today, high capacities secondary batteries are comparatively expensive and have a limited lifetime which limit the applications of secondary batteries. Increasing lifetime of secondary batteries is therefore one of the main interests of research and development in the field.

Secondary batteries usually consist of a plurality of electrochemical cells that are stacked together to achieve the desired battery capacity and/or the desired electrical voltage. Each electrochemical cell comprises at least two electrodes, a cathode and an anode which are electrically separated from each other, for example by a separator.

The electrodes, cathode and anode, each comprise a current collector and at least an electrochemically active electrode material. Many different electrochemically active electrode materials are known in the art which can be used either as electrochemically active cathode material or as electrochemically active anode material. The electrochemically active electrode materials are selected depending on the electrolyte used and on the application of the battery.

A plurality of electrochemical cells are assembled in a stack and are mounted in a battery case. Additional components such as a heat sink, cooling and electronics are added to control the status and the function of the batteries.

US 2011/070474 A1 describes a battery rack according to the preamble of claim 1.

Lithium based batteries are often based on pouch type cells, wherein a plurality of thin and flexible electrochemical cells are packed and preassembled in a sealed pouch. The pouch usually has a negative electrode and a positive electrode contact. The pouches are mechanically deformable and are usually fixed in a battery case.

In state of the art manufacturing processes, stacks of electrochemical cells or pouches are placed in a battery case or battery module and the heat sinks, cooling systems and electronic modules are attached to the battery stacks before the battery housing is closed.

US 2009/252994 A1 describes a method for replacing an electrochemical cell of a battery.

WO 2009/073225 describes a method and a system for stacking electrochemical cells, wherein a plurality of pouches containing electrochemical cells are stapled in support frames. The pouches in the frames are mounted into a battery case and are thermally and electrically connected.

These known manufacturing methods allow a fast assembly of the battery but a replacement of battery cells is not possible.

It is an object of the present invention to overcome the disadvantages of prior art.

### Summary of the invention

The disclosure proposes a battery rack according to claim 1. The battery is a battery for supporting a plurality of pouches. Each one of the plurality of pouches contains at least one electrochemical cell. The battery rack comprises a plurality of pouch receiving sections, wherein each one of the plurality of the pouch receiving sections comprises a releasable fastening element for releasably fixing and mechanically supporting at least one of the plurality of pouches. The battery rack also comprises at least one pair of electrical contact elements for electrically contacting the at least one electrochemical cell in the at least one of the plurality of pouches, when the pouch is positioned in the respective pouch receiving section. The fastening element is releasable for reversibly attaching the at least one pouch. The fastening element allows releasing and replacing one or more of the pouches in a simple and effective manner enabling a serviceable battery. This is particularly advantageous for secondary batteries. Pouches containing defect electrochemical cells or pouches containing cells at the end of their cycle-lifetime can be easily replaced. The fastening element may be a click-in mechanism or may comprise screws or other releasable mounting or fixation means. The battery rack comprising the plurality of receiving sections may be considered a base enabling the mechanical support of the pouches. The battery rack provides in the same time a mechanical support, alignment and an electrical contact to the at least one pouch.

The pouches may be battery packs or packs of electrochemical cells as generally known in the art, in particular of lithium ion secondary batteries. The present disclosure is particularly useful with foil-type pouches, i.e. pouches comprising electrochemical cells with current collector and/or electrode foils.

The pouches may be arranged in a pouch support frame or in another support structure that gives the pouches mechanical stability. This is in particular useful if electrochemical cells made from foil material are used that are not by themselves mechanically stable. The use of support frames as such is known in the art. If a pouch support frame is used, the fastening element may be adapted to receive and mechanically support the pouch support frame. In this case the pouches can be reversibly or irreversible fixed in the pouch support frame.

If the pouches are mechanically supported by the support frame, the battery rack aligns and mechanically supports the support frame, thereby in turn supporting the pouch. The fastening element may be adapted to receive and mechanically support the support frame which in turn mechanically supports the pouch. A support frame can be used to support a single pouch or a plurality of pouches. Support frames for a single pouch and the support frames for two pouches are per se known in the art.

Alternatively, the use of support frames can be omitted and the pouches can be directly supported by the battery rack.

The battery rack may be made from a rigid structure and can be made of different materials such as plastics or metals or other or a combination of different materials. The battery rack may comprise a heat sink and the heat sink may come into thermal contact with the at least one pouch. The heat sink allows effective heat transport and cooling of the electrochemical cells in the pouch.

The heat sink may be made from a rigid structure and may give the battery rack a rigid structure for mechanically supporting the plurality of pouches. In this case, the reception portion may be made from a lightweight material with a structure that is in itself not rigid and stable enough to mechanically and stably support the plurality of pouches.

The battery rack may further comprise an electronic circuit to control the at least one electrochemical cell in the at least one pouch. The electronic circuit may involve at least one of charging and de-charging control of the electrochemical cell, temperature control and the control of other parameters. One electronic circuit per pouch may be provided or an electronic circuit to control all or a plurality of pouches may be used.

The battery rack may further comprise a plurality of contact elements for contacting the plurality of pouches. The contact elements may be adapted to contact two or more electrode contacts of different pouches This allows connecting the pouches in series or in parallel to adjust the configuration of the battery depending on the needs. The electrical contact elements may reversibly contact the electrode contacts, i.e. the anode contact or the cathode contact. This may also allow modifying the battery if the application of the battery is changed.

The electrical contact elements may be implemented as bus bars. The electrical contact element may be in thermal contact with a heat sink. This allows an effective heat transfer from the electrical contact element and thereby from an electrode of the electrochemical cells in order to keep the electrochemical cells in a certain temperature range.

The battery rack may further comprise one or more sensors for controlling the temperature of the electrochemical cells and the pouches or other parameters of the battery.

The present invention also relates to secondary battery according to claim 7. The secondary battery comprises such a battery rack. The secondary battery further comprises a plurality of pouches fastened to the battery rack. The pouches are releasably fastened and can be easily exchanged. This provides a modularly battery system that can also be designed for a plurality of battery racks.

The secondary battery may comprise a housing in which the battery rack and the plurality of pouches is protected.

The present disclosure also relates to a method for manufacturing a secondary battery according to claim 9. The manufacturing method comprises providing a preassembled battery rack and attaching at least one pouch to the battery rack in a reversibly manner. The pouch is not fixedly connected to the battery rack and can be easily removed to increase serviceability of the battery rack.

The reversible attachment of the at least one pouch may comprise placing the at least one pouch in a frame and reversibly attaching the at least one frame to the battery rack.

The present invention also relates to a method for replacing a pouch of a secondary battery according to claim 12. The replacing method comprises releasing a pouch containing the electrochemical cell to be replaced from the battery rack to which the pouch is reversibly attached, and attaching a replacement pouch to the battery rack. The pouch to be replaced and the replacement pouch may be supported by a pouch support frame.

### Brief description of the drawings

Figure 1 shows an assembly with a rack according to the present invention.
Figure 2 shows the rack of figure 1 from an opposite view.
Figure 3a - 3c show the assembly of a rack according to the invention.

### Detailed description

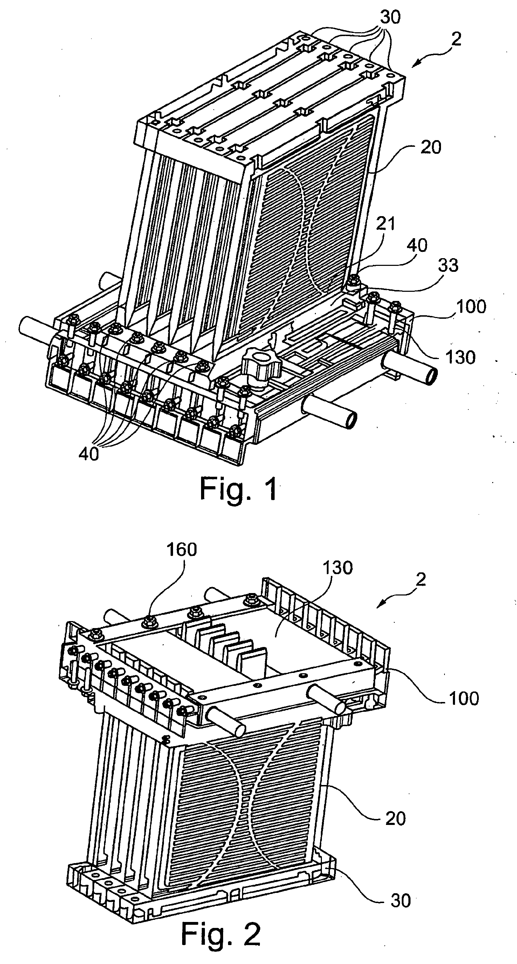

Figure 1 shows a battery module 2 that can be used alone or in combination with other battery modules in a primary or secondary battery. The battery module 2 is in use arranged in a housing to protect the battery cells and the electronics. The housing may be a standard battery housing and is not shown in the figures.

The battery module 2 comprises a battery rack or base 100 to which a plurality of pouches 20 are mounted. Each pouch 20 is mounted in a pouch support frame 30. In the example shown in figure 1, in total five pouch support frames 30 each comprising one pouch 20 are mounted to the rack 100. This number of support frames is only shown for illustrative purposes and a different number of pouches and pouch support frames 30 can be mounted to the rack 100. Typical numbers for pouches attached to a base 100 range from a single pouch to about a few hundred pouches. The number of pouches actually used depends on the application of the battery and the required properties. The pouches may be selected to provide final voltages of up to about 1000 V and 300 A currents. The number of pouches and cells, however may be easily multiplied by a factor of 2, 4, 6, or more.

The pouches 20 comprise a plurality of electrochemical cells, each cell comprising at least one anode, a cathode and a separator. The pouches 20 comprising the electrochemical cells are per se known in the art and any conventional pouches can be used with the present disclosure. Instead of pouches, other types of battery packs or electrochemical cells may be used.

Each pouch 20 has at least two electrical electrode contacts, a positive electrode contact and a negative electrode contact electrically contacting the respective electrodes of the electrochemical cells. In the example shown both electrical electrode contacts are arranged on the same rack facing side 21 of the pouch 20. The electrical electrode contacts can also be arranged in other configurations, for example on opposite sites of the pouch.

The pouch support frame 30 surrounds the pouch 20 and at least 4 sides and holds the pouch 20 mechanically stable. In this way, the pouch is protected from deflections and other mechanical forces or damages. The support frames 30, however, may be arranged differently and only cover a certain portion of the pouch 20. Furthermore, the support frames 30 may be adapted to the shape of the pouch. The support frames 30 may or may not comprise electrical contacts. In the examples shown, the support frames 30 provide mechanical stability to the pouches 20 and do not contain any electrical contact or control.

Each support frame 30 is inserted into a pouch receiving section 133 of a rack element 130 of the battery rack 100. The rack element 130 has a plurality of pouch receiving sections 133, wherein in each pouch receiving section 133 can take-up one and fix one support frame 30. The pouch receiving sections 133 have a complementary shape to a fitting portion 33 of the support frames 30. Screws 40 may be used as fastening elements to fix the support frames 30 containing the pouches 20 to the rack element 130. By releasing the screws 40, a corresponding frame 30 can be removed from the rack 100 and a replacement frame with a replacement pouch 20 can be inserted in the corresponding receiving section 133 and fastened using the screws 40. In this way, a defect pouch 20 can be easily replaced. Other releasable fastening elements than screws 40 can be used for attaching the pouches 20 to the rack 100. For example notches or snap hinges may be used.

In the shown example, the pouch support frames 30 and the pouches 20 are aligned in parallel and are essentially perpendicular to the rack 100. Other arrangements of the pouches 20 with respect to the rack 100 are, however, possible.

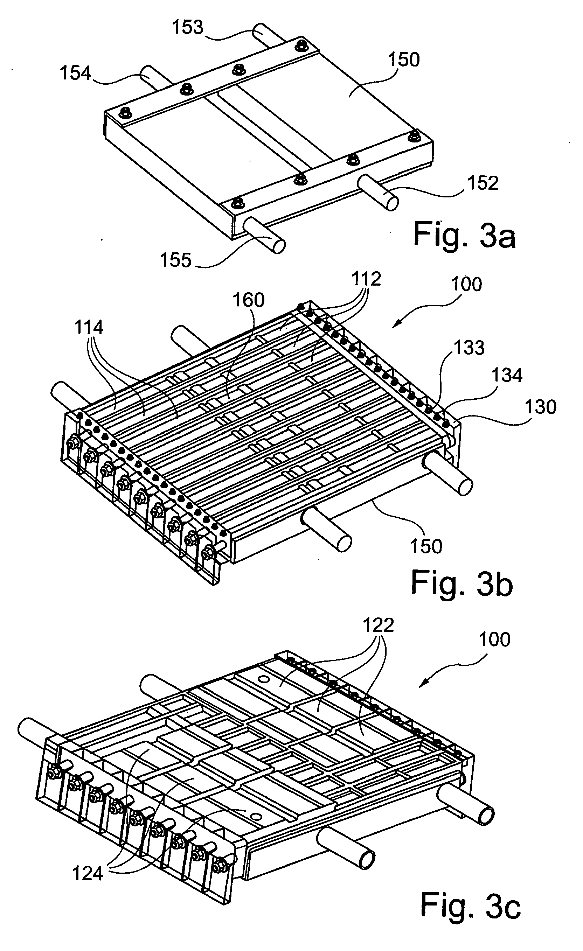

Figure 2 shows the battery module 2 of figure 1 from the opposite side showing electronics 160 and a heat sink 150, as will be described in more detail with respect to figure 3a - 3c.

Figure 3a shows a heat sink or cooling device 150 that can be used with the present disclosure. The heat sink 150 has thermal connections 152, 153, 154, 155 for connecting heat sink to heat transport means. The thermal connections 152, 153, 154, 155 may comprise fluid connectors for a cooling medium such as refrigerant that can flow through the heat sink 150. Alternatively, the contacts 152, 153, 154, 155 are metal contacts for the heat transport of heat generated by the electrochemical cells in use. The heat sink 150 forms a rigid backbone for the base-or rack 100. A receiving section 130 with a plurality of receiving elements 133 is arranged on the heat sink 150 forming the rack 100. Each one of the receiving elements 133 has guiding means for guiding and mechanically supporting and positioning frames 30 on the rack 100. Furthermore, the plurality of electronic circuits 160 is arranged on the rack 100. The electronics may serve for controlling for example temperature, current, voltage and other parameters of the electrochemical cells. Other functions may be implemented in the electronics 160.

Figure 3c shows a plurality of electrical contact elements or bus bars 122, 124 arranged on the rack 100 of figure 3b. The bus bars 122, 124 may be arranged in the rack element 130 and form an electrical contact with the electrode contact elements of the pouches. The bus bars 122, 124 may additionally in thermal contact with the heat think 150. An electrically isolating and thermally conductive material may be used between the heat think 150 and the bus bars 122, 124 to avoid an electric potential on the heat think, while an efficient cooling of the electrochemical cells can be obtained.

The bus bars 122, 124 can have different sizes and can be arranged to electrically contact the pouches 20 in series or in parallel depending on the arrangement of the bus bars 122, 124. Any combination of contacting the electrical electrode contacts of the pouches in series and/or in parallel can be adjusted depending on the needs of the final battery. For example, it can be useful to group a certain number of pouches 20 and to electrically connect all pouches 20 of the group in parallel to increase the capacity. Several groups of pouches may then be connected in series to increase the nominal tension of the battery according to the requirements. The bus bars 122, 124 can be used for any configuration of connecting the pouches 20. It is also possible to group and to electrically connect all pouches 20 of the group in series in order to increase the nominal voltage or to connect the ouches in any combination of series and parallel. If the requirement or application of the battery changes during the lifetime of the battery, the bus bars may be rearranged to a different configuration if needed. In this way, the battery can be adapted to different applications and different nominal voltages can be obtained.

It is an advantage that the pouches 20 can be removed to readjust or exchange items of the rack 100. This allows a serviceable battery module wherein each part can be easily exchanged extending the lifetime of secondary batteries. It is also possible to exchange all pouches of a battery, for example at the end of the life time and to reuse the base with new pouches.

Each pouch receiving section 133 of the rack element 130 comprises openings 112, 114 that con be used for fixation of the bus bars 122, 124. A snap-in mechanism, screws or other reversible fixation means can be used to arrange the bus bars 122, 124 on the rack element 130.

## Claims

1. A battery rack (100) for supporting at least one of a plurality of pouches (20), arranged in a pouch support frame (30) and containing at least one electrochemical cell, the battery rack (100) comprising:
a plurality of pouch receiving sections (133); and
at least one pair of electrical contact elements (122, 124) positioned within the pouch receiving sections (133) for electrically contacting the at least one electrochemical cell in the at least one of the plurality of pouches (20), **characterised in that** each of the plurality of pouch receiving sections (133) is provided with a releasable fastening element (40) for releasably fixing and mechanically supporting each of the at least one of the plurality of pouches (20), wherein each of the releasable fastening elements (40) is adapted to receive and mechanically support the pouch support frame (30).

2. The battery rack (100) according to claim 1, wherein the battery rack (100) comprises a heat sink (150) in thermal contact with at least one electrode of the at least one electrochemical cell in the at least one of the plurality of pouches (20)) when the pouch is attached to the battery rack (100).

3. The battery rack (100) according to claim 2, wherein the rack element (130) and the heat sink (150) together form a rigid structure.

4. The battery rack (100) according to any one of the preceding claims, wherein the battery rack (100) comprises at least one electronic circuit (160) for controlling the at least one electrochemical cell.

5. The battery rack (100) according to any one of the preceding claims, wherein at least one of the electrical contact elements (122, 124) is in electrical contact with the at least one electrochemical cell of at least two of the plurality of pouches.

6. The battery rack (100) according to any one of the preceding claims, wherein the battery rack (100) further comprises at least one sensor.

7. A secondary battery comprising:
at least one battery rack (100) according to any one of the preceding claims; and
a plurality of pouches (20), wherein at least one of the plurality of pouches (20) is releasably fastened to the at least one battery rack (100).

8. The secondary battery of claim 7, further comprising a housing in which the at least one battery rack (100) and the plurality of pouches (20) are arranged inside the housing.

9. A method for manufacturing a secondary battery, the method comprising:
providing a battery rack (100) according to any one of claims 1 to 7;
reversibly attaching at least one of a plurality of pouches (20) to the battery rack (100), wherein the step of reversibly attaching the at least one of the plurality of pouches (20) to the battery rack (100) comprises placing the at least one of the plurality of pouches (20) in a pouch support frame (30) and reversibly attaching the at least one pouch support frame (30) to the battery rack (100) by using a releasable fastening element (40).

10. The method for manufacturing a secondary battery according to claim 9, wherein the reversibly attaching the at least one of the plurality of pouches (20) to the battery rack (100) comprises at least one of establishing of an electrical contact, a thermal contact and mechanically supporting the at least one of the plurality of pouches (20) by the battery rack (100).

11. The method for manufacturing a secondary battery according to claims 9 or 10, further comprising arranging at least one electrical contact element (122, 124) such that it is in electrical contact with two or more electrode contacts of two or more pouches (20).

12. A method for replacing an electrochemical cell of a secondary battery, the method comprising:
releasing a pouch (20) containing the electrochemical cell by using a releasable fastening element (40) to be replaced from a battery rack (100) according to any one of claims 1 to 7, to which the pouch is reversibly attached; and
attaching a replacement pouch to the battery rack (100), wherein the at least one pouch (20) and the replacement pouch (20) are placed in a pouch support frame (30), the pouch support frame (30) comprising a releasable mechanical fixation for releasably fastening the pouch support frame (30) to the battery rack (100).

## Patentansprüche

1. Batteriehalterung (100) zum Stützen von zumindest einem von einer Vielzahl von Beuteln (20), welche in einem Beutelstützrahmen (30) angeordnet sind und zumindest eine elektrochemische Zelle beinhalten, die Batteriehalterung (100) umfassend:
eine Vielzahl von Beutelaufnahmeabschnitten (133); und
zumindest ein Paar von elektrischen Kontaktelementen (122, 124), positioniert innerhalb der Beutelaufnahmeabschnitte (133), zum elektrischen Kontaktieren der zumindest einen elektrochemischen Zelle in dem zumindest einen von der Vielzahl von Beuteln (20),
**dadurch gekennzeichnet, dass** jeder von der Vielzahl von Beutelaufnahmeabschnitten (133) mit einem lösbaren Befestigungselement (40) zum lösbaren Befestigen und mechanischen Stützen jedes von dem zumindest einem von der Vielzahl von Beuteln (20) bereitgestellt ist, wobei jedes von den lösbaren Befestigungselementen (40) geeignet ist, um den Beutelstützrahmen (30) aufzunehmen und mechanisch zu stützen.

2. Batteriehalterung (100) nach Anspruch 1, bei welcher die Batteriehalterung (100) einen Kühlkörper (150) umfasst, welcher in thermischen Kontakt mit zumindest einer Elektrode der zumindest einen elektrochemischen Zelle in dem zumindest einen von der Vielzahl von Beuteln (20) steht, wenn der Beutel an die Batteriehalterung (100) befestigt ist/wird.

3. Batteriehalterung (100) nach Anspruch 2, bei welcher das Halterungselement (130) und der Kühlkörper (150) zusammen eine starre Struktur ausbilden.

4. Batteriehalterung (100) nach einem der vorangehenden Ansprüche, bei welcher die Batteriehalterung (100) zumindest eine elektrische Schaltung (160) zum Steuern der zumindest einen elektrochemischen Zelle umfasst.

5. Batteriehalterung (100) nach einem der vorangehenden Ansprüche, bei welcher zumindest eines von den elektrischen Kontaktelementen (122, 124) sich in elektrischem Kontakt mit der zumindest einen elektrochemischen Zelle von zumindest zwei von der Vielzahl von Beuteln befindet.

6. Batteriehalterung (100) nach einem der vorangehenden Ansprüche, bei welcher die Batteriehalterung (100) weiter zumindest einen Sensor umfasst.

7. Sekundärbatterie umfassend:
zumindest eine Batteriehalterung (100) nach einem der vorangehenden Ansprüche; und
eine Vielzahl von Beuteln (20), wobei zumindest einer der Vielzahl von Beuteln (20) lösbar an zumindest einer Batteriehalterung (100) befestigt ist.

8. Sekundärbatterie nach Anspruch 7, weiter umfassend ein Gehäuse, in welchem die zumindest eine Batteriehalterung (100) und die Vielzahl von Beuteln (20) innerhalb des Gehäuses angeordnet sind.

9. Verfahren zur Herstellung einer Sekundärbatterie, wobei das Verfahren umfasst:
bereitstellen einer Batteriehalterung (100) nach einem der Ansprüche 1 bis 7;
reversibles Befestigen zumindest eines von einer Vielzahl von Beuteln (20) an die Batteriehalterung (100), wobei der Schritt des reversiblen Befestigens des zumindest einen von der Vielzahl von Beuteln (20) an die Batteriehalterung (100) das Platzieren des zumindest einen von der Vielzahl von Beuteln (20) in einen Beutelstützrahmen (30) umfasst; und reversibles Befestigen des zumindest einen Beutelstützrahmens (30) an die Batteriehalterung (100) indem ein lösbares Befestigungselement (40) verwendet wird.

10. Verfahren zur Herstellung einer Sekundärbatterie nach Anspruch 9, bei welchem das reversible Befestigen des zumindest einen von der Vielzahl von Beuteln (20) an die Batteriehalterung (100) zumindest ein Festlegen eines elektrischen und/oder eines thermischen Kontakts und/oder das mechanische Stützen des zumindest einen von der Vielzahl von Beuteln (20) durch die Batteriehalterung (100) umfasst.

11. Verfahren zur Herstellung einer Sekundärbatterie nach Anspruch 9 oder 10, weiter umfassend ein Anordnen zumindest eines elektrischen Kontaktelements (122, 124), derart dass dieses in elektrischem Kontakt mit zwei oder mehreren Elektrodenkontakten von zwei oder mehreren Beuteln (20) steht.

12. Verfahren zum Ersetzen einer elektrochemischen Zelle einer Sekundärbatterie, das Verfahren umfassend:
Lösen eines Beutels (20), welcher die elektrochemische Zelle beinhaltet, indem ein lösbares Befestigungselement (40) verwendet wird, um von einer Batteriehalterung (100) nach einem der Ansprüche 1 bis 7 ersetzt zu werden, an welche der Beutel reversibel befestigt ist/wird; und
Befestigen eines Ersatzbeutels an der Batteriehalterung (100), wobei der zumindest eine Beutel (20) und der Ersatzbeutel (20) in einem Beutelstützrahmen (30) platziert werden, wobei der Beutelstützrahmen (30) eine lösbare mechanische Fixierung zum lösbaren Befestigen des Beutelstützrahmens (30) an die Batteriehalterung (100) umfasst.

## Revendications

1. Bâti-support de batterie (100) pour supporter au moins une d'une pluralité de poches (20), agencé dans un cadre de support de poche (30) et comprenant au moins une cellule électrochimique, le bâti-support de batterie (100) comprenant :
une pluralité de sections de réception de poche (133) ; et
au moins une paire d'éléments de contact électrique (122, 124) positionnée à l'intérieur des sections de réception de poche (133) pour être en contact électrique avec la au moins une cellule électrochimique dans la au moins une poche de la pluralité de poches (20), **caractérisé en ce que** chacune de la pluralité de sections de réception de poche (133) est fournie avec un élément d'attache amovible (40) pour fixer de manière amovible et pour supporter mécaniquement chacune de la pluralité de poches (20), chacun des éléments d'attache amovible(s) (40) étant adapté pour recevoir et supporter mécaniquement le cadre de support de poche (30).

2. Bâti-support de batterie (100) selon la revendication 1, dans lequel le bâti-support (100) comprend un dissipateur thermique (150) en contact thermique avec au moins une électrode de la au moins une cellule électrochimique dans la au moins une de la pluralité de poches (20) lorsque la poche est attachée au bâti-support de batterie (100).

3. Bâti-support de batterie (100) selon la revendication 2, dans lequel l'élément de bâti (130) et le dissipateur thermique (150) forment ensemble une structure rigide.

4. Bâti-support de batterie (100) selon l'une quelconque des revendications précédentes, dans lequel le bâti-support (100) comprend au moins un circuit électronique (160) pour commander la au moins une cellule électrochimique.

5. Bâti-support de batterie (100) selon l'une quelconque des revendications précédentes, dans lequel au moins un des éléments de contact électrique (122, 124) est en contact électrique avec la au moins une cellule électrochimique de au moins deux de la pluralité de poches.

6. Bâti-support de batterie (100) selon l'une quelconque des revendications précédentes, dans lequel le bâti-support de batterie (100) comprend en outre au moins un capteur.

7. Batterie secondaire comprenant :
au moins un bâti-support de batterie (100) selon l'une quelconque des revendications précédentes ;
et
une pluralité de poches (20), dans laquelle au moins une de la pluralité de poches (20) est attachée de manière amovible audit au moins un bâti-support de batterie (100).

8. Batterie secondaire selon la revendication 7, comprenant en outre un boîtier dans lequel le au moins un bâti-support de batterie (100) et la pluralité de poches (20) sont agencés, à l'intérieur du boîtier.

9. Procédé de fabrication d'une batterie secondaire, le procédé comprenant les étapes suivantes:
fournir un bâti-support de batterie (100) selon l'une quelconque des revendications 1 à 7 ;
attacher de manière réversible au moins une d'une pluralité de poches (20) au bâti-support de batterie (100), dans lequel l'étape d'attacher de manière réversible la au moins une poche de la pluralité de poches (20) au bâti-support de batterie (100) comprend le placement de la au moins une poche de la pluralité de poches (20) dans un cadre de support de poche (30) et l'attache réversible du au moins un cadre de support de poche (30) au bâti-support de batterie (100), en utilisant un élément d'attache amovible (40).

10. Procédé de fabrication d'une batterie secondaire selon la revendication 9, dans lequel l'attache réversible de au moins une poche de la pluralité de poches (20) au bâti-support de batterie (100) comprend au moins l'un de l'établissement d'un contact électrique, l'établissement d'un contact thermique, et le support mécanique de la au moins une poche de la pluralité de poches (20) par le bâti-support de batterie (100).

11. Procédé de fabrication d'une batterie secondaire selon la revendication 9 ou 10, comprenant en outre l'étape d'agencer au moins un élément de contact électrique (122, 124) de sorte qu'il soit en contact électrique avec deux ou plus contacts d'électrode de deux ou plus poches (20).

12. Procédé de remplacement d'une cellule électrochimique d'une batterie secondaire, le procédé comprenant :
libérer une poche (20) comprenant la cellule électrochimique qui doit être remplacée en utilisant un élément d'attache amovible (40), d'un bâti-support de batterie (100) selon l'une quelconque des revendications 1 à 7, et auquel la poche est attachée de manière réversible ; et
attacher une poche de remplacement au bâti-support de batterie (100), dans lequel la au moins une poche (20) et la poche de remplacement (20) sont placées dans un cadre de support de poche (30), le cadre de support de poche (30) comprenant une fixation mécanique amovible pour attacher de manière amovible le cadre de support de poche (30) au bâti-support de batterie (100).
